# EUROPÄISCHE PATENTSCHRIFT

(11) **EP 0 674 747 B1**
(45) Veröffentlichungstag und Bekanntmachung des Hinweises auf die Patenterteilung: **14.01.1998**
(21) Anmeldenummer: 94930206.1
(22) Anmeldetag: 21.10.1994
(51) Int. Cl.: F01N 1/08, G10K 11/16

(54) **SCHALLDÄMPFER**
SILENCER
SILENCIEUX

(30) Priorität: 21.10.1993 DE 9316060 U
(43) Veröffentlichungstag der Anmeldung: 04.10.1995
(73) Patentinhaber: Liese, Hermann, D-82008 Unterhaching (DE)
(72) Erfinder: Liese, Hermann, D-82008 Unterhaching (DE)
(74) Vertreter: Schmitz, Hans-Werner, Dipl.-Ing.
(86) Internationale Anmeldenummer: EP9403474
(87) Internationale Veröffentlichungsnummer: WO9511372

(56) Entgegenhaltungen:
- DE-U- 9 210 988
- FR-A- 1 285 014
- PATENT ABSTRACTS OF JAPAN vol. 13, no. 77 (M-801) 22. Februar 1989 & JP,A,63 277 812 (MITSUBISHI HEAVY IND LTD) 15. November 1988
- DATABASE WPI Week 9009, Derwent Publications Ltd., London, GB; AN 90-066517 09! 'Muffler for impeding or reflecting exhaust gas' & US,A,4 890 691 (CHINGHO C) 2. Januar 1990

## Beschreibung

Die Erfindung bezieht sich auf einen Schalldämpfer, bestehend aus einem oder mehreren Schalldämpfelementen, die in einem von einer schallbeaufschlagten Strömung durchströmten runden oder ovalen Führungskanal eingebaut sind.

Derartige Vorrichtungen sind z.B. als Abgasanlagen an Triebwerken oder Luftführungen von Klimaanlagen bekannt. Bei diesen Anlagen wird die Schalldämmung durch Anordnung von "Prallblechen" im Führungskanal (Reflektionsdämpfung) oder durch Perforierung des Führungskanals und gleichzeitiger Ummantelung mit schalldämmenden Materialien (z.B. Steinwolle) zwischen perforiertem Führungsrohr und einer weiteren gasdichten Ummantelung (Absortionsdämpfung) erreicht.

Bei diesen Anlagen kann eine ausreichende Schalldämmung nur durch große Baulängen und damit verbundenen großen Material- und Gewichtsaufwand erreicht werden.

Die Erfindung baut auf dem unter Rollennummer DE-U-92 10 988 eingetragenen Gebrauchsmuster für eine Schalldämmvorrichtung für rechteckige Querschnitte auf.

Die WO 88/09428 beschreibt einen Schalldämpfer für ein Wasserfahrzeug, bei welchem ein Abgas-Wasser-Gemisch durch ein Rohrelement geleitet wird, dessen Wandung durch Aufrollen eines Lochblechs gebildet wird. Die Strömung dringt durch die einzelnen Ausnehmungen des Lochblechs, wodurch sich eine Dämpfungswirkung ergibt.

Der Erfindung liegt die Aufgabe zugrunde, einen Schalldämpfer der eingangs genannten Art zu schaffen, bei welchem unter Vermeidung der Nachteile des Stands der Technik bei optimierten Strömungsverhältnissen, bei großer Dämpfungsleistung und bei optimiertem Gasgegendruck eine geringe Baugröße erzielbar ist.

Der Erfindung liegt auch die Aufgabe zugrunde, einen Schalldämpfer derart zu verbessern, daß bei geringem Platz-, Material- und Gewichtsaufwand eine erhöhte Schalldämmung erzielbar ist.

Der Erfindung liegt weiterhin die Aufgabe zugrunde, einen Schalldämpfer der eingangs genannten Art zu schaffen, bei welchem unter Vermeidung der Nachteile des Standes der Technik bei optimierten Srömungsverhältnissen, bei großer Dämpfleistung und bei optimiertem Abgasgegendruck eine geringe Baugröße erzielbar ist.

Erfindungsgemäß wird die Aufgabe durch die Merkmale des Hauptanspruchs gelöst, die Unteransprüche zeigen weitere vorteilhafte Ausgestaltungen der Erfindung.

Die Erfindung eignet sich besonders für Schalldämm-maßnahmen an Anlagen mit wenig zur Verfügung stehendem Platz und Gewichtslimitierungen, bei gleichzeitiger Limitierung des max. Druckes bei vorgegebenem Durchsatz.

Der aus dem Gebrauchsmuster 92 10 988.8 bekannte Schalldämpfer weist nur eine begrenzte Dämpfungswirkung auf, da die Eintrittsströmung rechtwinklig auf die Eintrittsebene auftrifft. Dies kann zu unerwünschten Reflexionen der Schallwellen und zu Störungen des Strömungsverhaltens führen. Ein weiterer Nachteil liegt darin, daß bei dem vorbekannten Schalldämpfer lediglich rechteckige Querschnitte realisierbar sind. Demgegenüber ist erfindungsgemäß die Möglichkeit geschaffen, die Eintrittsströmung in einem flachen Winkel auf die Eintrittsebene zu leiten. Hierdurch ergeben sich wesentlich verbesserte Schalldämpfeigenschaften, welche insbesondere durch das verbesserte Strömungsverhalten hervorgerufen werden. Zusätzlich besteht die Möglichkeit, den Schalldämpfer kleiner zu bauen bzw. in einem vorgegebenen Volumen eine größere Anzahl von Schalldämpfelementen einzubauen.

Diese Anforderungen werden z.B. an Schalldämpfer von Flugzeugtriebwerken gestellt, die gewichtskritisch sind und bei denen innerhalb der Triebwerksverkleidung nur sehr begrenzter Raum zur Verfügung steht. Außerdem darf der Schalldämpfer nur einen begrenzten Rückstau zum Triebwerk erzeugen.

Herkömmliche Anlagen (Absorbtionsdämpfer) müssen auf Grund ihrer großen Abmessungen außerhalb der Triebwerksverkleidung angebracht werden, sind aerodynamisch sehr ungünstig und schwer.

Unter Anwendung der vorliegenden Erfindung an dem Schalldämpfer eines Flugzeuges wurde durch Integration eines 0.5 Kg schweren Dämpfelementes von 95 mm Durchmesser und 200 mm Länge in die vorhandene Abgasanlage eine um 1.5 dB(A) bessere Dämpfleistung gegenüber einer herkömmlichen externen Schalldämpferanlage mit ca. 6 Kg Masse und ca. 15 cm Durchmesser und 1 m Länge erzielt.

Dieser Vergleich basiert auf amtlich anerkannten Meßergebnissen.

Die verbesserte schalldämpfende Wirkung der Erfindung ergibt sich aus der Gestaltung der Gasführungskanäle, die durch ihre Innenkontur jeweils schallmäßig gleiche Gasströme gegensinnig zusammenführen und gleichzeitig durch ihre konkaven Außenkonturen optimale Reflektionsfächen bilden.

Der erfindungsgemäße Schalldämpfer erreicht das gleiche Maß an Schalldämmung gegenüber herkömmlichen Anlagen (Reflektion, Absortion) mit erheblich geringerem Raum-, Gewichts- und Materialaufwand bzw. bei gleichem Aufwand wird eine erheblich bessere Schalldämmung erreicht.

Die vorliegende Erfindung ermöglicht durch Variation gemäß Anspruch 2 und 3 eine beliebige Anpassung der radialen und lateralen Abmessungen des Strömungsführungskanals an die durch Druck und Durchsatz gestellten Randbedingungen.

Die Erfindung wird nachfolgend an Hand von in der Zeichnung dargestellten Ausführungsbeispielen beschrieben. Es zeigen:
- Fig. 1: eine Seitenansicht eines Strömungsführungskanals mit einem kegelförmig zur Strömungsrichtung angeordneten Schalldämmelement.
- Fig. 2: eine Seitenansicht eines Stromführungskanals mit parallel zur Eintrömrichtung angeordneter Eintrittsebene (3) und Austrittsebene (4).
- Fig. 3: eine Seitenansicht eines Stromführungskanals mit parallel zur Einströmrichtung angeordneter Eintrittsebene (3) und Austrittsebene (4) mit zwei auf gleicher Ebene liegenden Einströmöffnungen und einer radialen Ausströmöffnung.
- Fig. 4: einen vergrößerten radialen Schnitt des Schalldämmelementes aus Fig. 1, Fig. 2 und Fig. 3.
- Fig. 5: eine Variante des Schalldämmelementes, dargestellt als radialer Schnitt analog zu Fig. 4.
- Fig. 6: eine weitere Variante des Schalldämmelementes, dargestellt als radialer Schnitt analog zu Fig. 4 und 5.
- Fig. 7: einen radialen Schnitt durch einen Schalldämpfer gemäß Fig. 2 und Fig. 3 mit zylinderförmigem Dämmelement der in Fig. 4 dargestellten Bauweise.

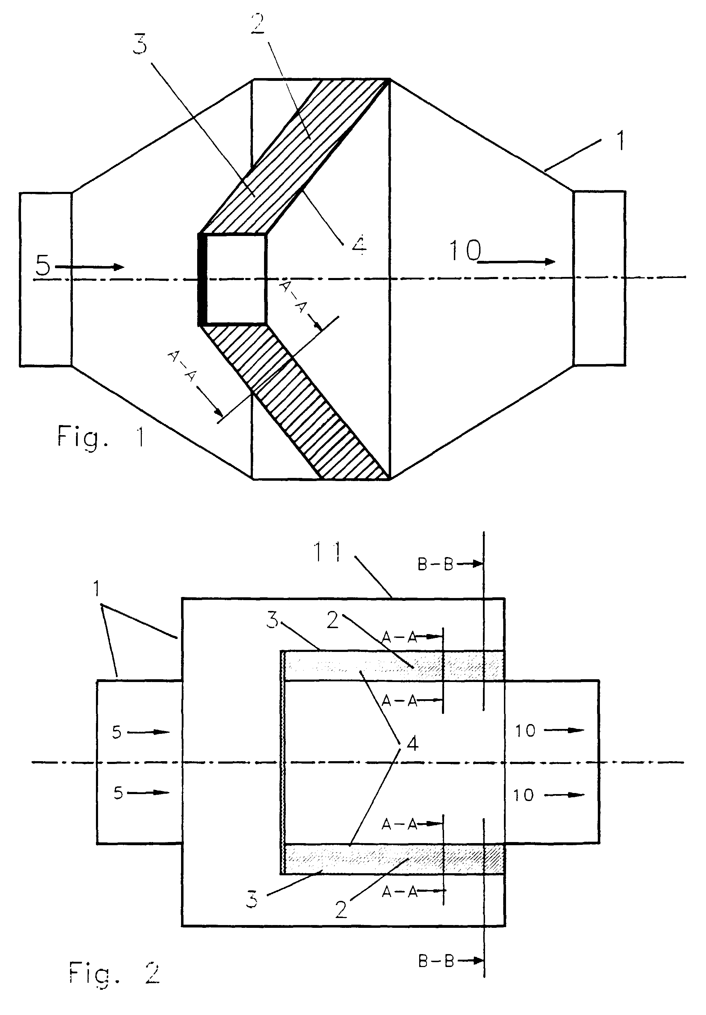

In der Fig. 1 ist ein Querschnitt durch eine typische Abgasanlage dargestellt. Ein Schalldämmelement (2) ist in dem Beispiel in einem erweiterten runden Querschnitt kegelförmig zur Eintrittsströmung (5) angebracht. Durch Änderung des Kegelwinkels des Dämmelementes (2) kann eine Anpassung der durchströmten Fläche des Dämmelementes (2) an die erforderlichen Platz- und Druckverhältnisse erfolgen.

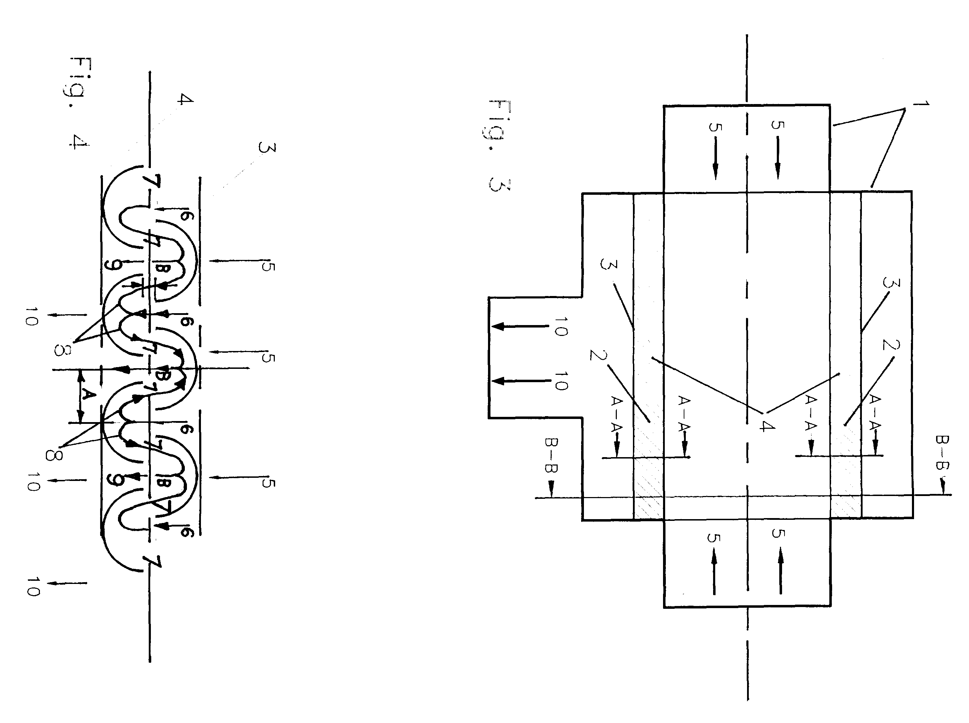

Die Fig. 2 zeigt einen Schnitt durch eine typische Abgasanlage, bei der die Eintrittsströmung (5) und die Austrittsströmung (10) auf einer gemeinsamen Linie liegen. Das Dämmelement (2) hat eine zylindrische Form und wird radial von außen nach innen durchströmt.

Durch Änderung der Länge des Dämmelementes (2) kann eine Anpassung an die erforderlichen Platz- und Druckverhältnisse erfolgen.

Die Fig. 3 zeigt einen Schnitt durch eine typische Abgasanlage, bei der zwei seitliche Eintrittsströmungen (5) auf einer gemeinsamen Linie liegen. Die gezeichnete Austrittsströmung (10) liegt rechtwinklich zur Eintrittsströmung (5). Eine oder mehrere Ausströmöffnungen können in beliebigem Winkel auf der äußeren Ummantelung (11) angebracht werden. Das Dämmelement (2) hat eine zylindrische Form und wird radial von innen nach außen durchströmt.

Durch Änderung der Länge des Dämmelementes (2) kann eine beliebige Anpassung an die erforderlichen Platz- und Druckverhältnisse erfolgen.

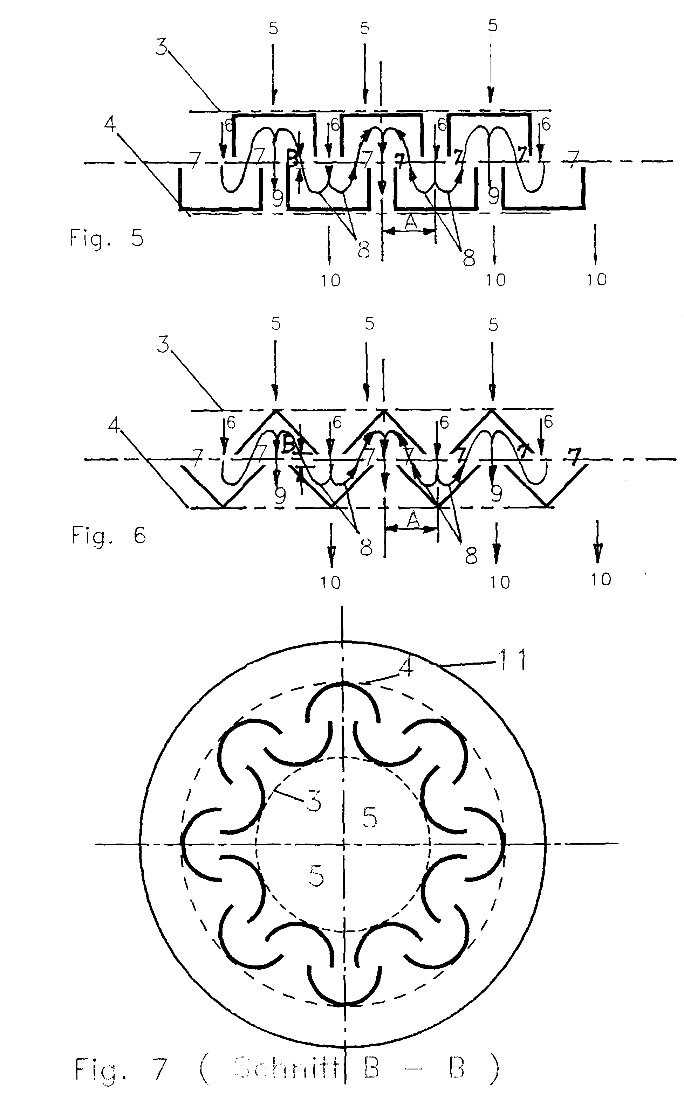

Die Fig. 5, Fig. 6 und Fig. 7 zeigen einen radialen Schnitt durch die Eintrittsebene (3) und die Austrittsebene (4) und die durch diese zwei Ebenen gebildeten Führungskanäle (7). Der auf die Eintritttsebene auftreffende Schall der Eintrittsströmung (5) wird von der Außenfläche der Eintrittsebene weitgehend reflektiert und bei der Durchströmung der Eintrittsebene (3) wird die Eintrittsströmung (5) in mehrere erste Teilströmungen (6) geteilt.

Die durch die Eintrittsebene (3) und die Austrittsebene (4) gebildeten Strömungskanäle (7) teilen die ersten Teilströmungen (6) in jeweils zwei weitere zweite Teilströmungen (8).

Im weiteren Verlauf der Strömungskanäle (7) werden jeweils zwei zweite Teilströmungen (8), die aus der Teilung benachbarter erster Teilströmungen (6) entstanden sind, in Gegenrichtung aufeinandergeführt und bilden die eine dritte Teilströmung (9).

Durch das gegensinnge Zusammenführen zweier schallmäßig gleicher Strömungen ensteht eine virtuelle Prallwand und führt zu einer erheblichen Lärmminderung.

Die dritten Teilströmungen (9) werden durch die Austrittsebene (4) in den Stromführungskanal (1) geleitet und zur Ausgangsströmung (10) vereint.

Die der Austrittsströmung (10) abgewandten Seiten der Austrittsebene (4) bilden die ideale aerodynamische Form zur Herstellung einer gleichmäßig vermischten verlangsamten Strömung.

Die Fig. 7 zeigt den Schnitt durch eine Abgasanlage gemäß Fig. 2 und Fig. 3 mit parallel zur Eintrittsströmung (5) liegender Eintrittsebene (3) und Austrittsebene (4) mit der in Fig. 4 gezeigten Bauart der Luftführung.

### Bezeichnungen:

- 1 =: Strömungsführungskanal
- 2 =: Schalldämmelement
- 3 =: Eintrittsebene
- 4 =: Austrittsebene
- 5 =: Eintrittsströmung
- 6 =: erste Teilströmung
- 7 =: Führungskanal
- 8 =: zweite Teilströmung
- 9 =: dritte Teilströmung
- 10 =: Austrittsströmung
- 11 =: äußere Ummantelung

- A =: radiale Versetzung der Eintrittsebene (3) und der Austrittsebene (4)
- B =: laterale Versetzung der Eintrittsebene (3) und der Austrittsebene (4)
- A-A=: Schnittebene ( Teilschnitt durch ein Dämmelement )
- B-B=: Schnittebene ( Gesamtschnitt )

## Patentansprüche

1. Schalldämpfer mit einem Gehäuse mit zumindest einer Einströmöffnung und zumindest einer Ausströmöffnung sowie mit in dem Gehäuse angeordneten Schalldämpfelementen (2), wobei die Schalldämpfelemente (2) zwischen einer Eintrittsebene (3) und einer hierzu im wesentlichen parallelen Austrittsebene (4) angeordnet sind, wobei die Schalldämpfelemente (2) in Form einer Mehrzahl von zueinander im wesentlichen parallelen, länglichen Gasführungs- und Prallelementen ausgebildet sind, welche in zwei zueinander beabstandeten und parallelen reihenartigen Anordnungen im seitlichen Abstand zueinander angeordnet sind, einen U-förmigen, V-förmigen oder halbkreisförmigen Querschnitt aufweisen und so angeordnet sind, daß die geöffneten Querschnittsbereiche einander überlappend einander zugewandt sind, dadurch gekennzeichnet, daß sowohl die Eintrittsebene (3) und die Austrittsebene (4) als auch die zwischen diesen angeordneten länglichen Gasführungs- und Prallelemente in einem Winkelbereich < 90° bis 0° zur Eintrittsöffnung (5) angeordnet sind.

2. Schalldämpfer nach Anspruch 1, dadurch gekennzeichnet, daß die Eintrittsebene (3) und die Austrittsebene (4) auf Kegelmänteln angeordnet sind.

3. Schalldämpfer nach Anspruch 1, dadurch gekennzeichnet, daß die Eintrittsebene (3) und die Austrittsebene (4) auf Zylindermänteln angeordnet sind.

4. Schalldämpfer nach einem der Ansprüche 1 bis 3, dadurch gekennzeichnet, daß im Bereich der Einströmöffnungen der Eintrittsebene (3) ein Strömungsteiler angeordnet ist, der die Eintrittsströmung (5) in eine erste Teilströmung (6) und diese in eine zweite Teilströmung (8) aufteilt und diese zweite Teilströmung (8) im Bereich der Austrittsebene (4) zu einer dritten Teilströmung (9) und danach zu der Ausstrittsströmung (10) zusammenführt.

5. Schalldämpfer nach Anspruch 3, dadurch gekennzeichnet, daß die Strömungsrichtung reversibel ist, wobei durch Umkehrung der Strömung die Austrittsebene (4) zur Eintrittsebene (3) und die Eintrittsebene (3) zur Austrittsebene (4) werden.

## Claims

1. A silencer having a housing with at least one inlet port and at least one outlet port and also silencing components (2) disposed in the housing, wherein the silencing components (2) are disposed between an inlet plane (3) and an outlet plane (4) substantially parallel thereto, wherein the silencing components (2) are constructed in the form of a plurality of oblong gas flow control and deflector components substantially parallel to one another, which are disposed laterally spaced in relation to one another in two row-type arrangements spaced from and parallel to one another, have a U-shaped, V-shaped or semi-circular cross section and are disposed so that the opened cross-sectional regions are faced towards one another overlapping one another,
**characterised in that** both the inlet plane (3) and the outlet plane (4) and also the oblong gas flow control and deflector components disposed therebetween are disposed within an angle range < 90° to 0° to the inlet port (5).

2. A silencer according to Claim 1,
**characterised in that** the inlet plane (3) and the outlet plane (4) are disposed on conical shells.

3. A silencer according to Claim 1,
**characterised in that** the inlet plane (3) and the outlet plane (4) are disposed on cylindrical shells.

4. A silencer according to one of Claims 1 to 3,
**characterised in that** in the region of the inlet ports of the inlet plane (3) is disposed a flow divider, which divides the inlet flow (5) into a first partial flow (6) and this into a second partial flow (8) and brings together this second partial flow (8) in the region of the outlet plane (4) to a third partial flow (9) and to the outlet flow (10).

5. A silencer according to Claim 3,
**characterised in that** the direction of flow is reversible, with the outlet plane (4) becoming the inlet plane (3) and the inlet plane (3) the outlet plane (4) as a result of reversing the flow.

## Revendications

1. Silencieux comportant un boîtier muni d'au moins un orifice d'entrée et d'au moins un orifice de sortie, ainsi que des éléments de silencieux (2) disposés dans le boîtier, les éléments de silencieux (2) étant disposés entre un plan d'entrée (3) et un plan de sortie (4) qui est sensiblement parallèle à ce dernier, les éléments de silencieux (2) étant réalisés sous la forme d'une pluralité d'éléments allongés de guidage de gaz et de chicane, sensiblement parallèles les uns par rapport aux autres, qui sont disposés en deux groupes parallèles du type rangée, écartés latéralement l'un de l'autre, qui présentent une section transversale en forme de U, en forme de V ou semi-circulaire, et qui sont disposés de telle sorte que les zones de section transversale ouvertes soient orientées les unes vers les autres en se recouvrant mutuellement, caractérisé en ce que, non seulement le plan d'entrée (3) et le plan de sortie (4), mais aussi les éléments allongés de guidage de gaz et de chicane disposés entre ces plans, sont disposés dans une zone angulaire comprise entre < 90° et 0° par rapport à l'orifice d'entrée (5).

2. Silencieux selon la revendication 1, caractérisé en ce que le plan d'entrée (3) et le plan de sortie (4) sont disposés sur des enveloppes coniques.

3. Silencieux selon la revendication 1, caractérisé en ce que le plan d'entrée (3) et le plan de sortie (4) sont disposés sur des enveloppes cylindriques.

4. Silencieux selon l'une des revendications 1 à 3, caractérisé en ce qu'un diviseur de courant est disposé dans la zone des orifices d'entrée du plan d'entrée (3), qui répartit le courant d'entrée (5) en un premier courant partiel (6) et ce dernier en un deuxième courant partiel (8), et qui, dans la zone du plan de sortie (4), forme à partir de ce deuxième courant partiel (8) un troisième courant partiel (9) et ensuite le courant de sortie (10).

5. Silencieux selon la revendication 3, caractérisé en ce que le sens du courant est réversible, par suite de l'inversion du courant, le plan de sortie (4) devenant le plan d'entrée (3), et le plan d'entrée (3) devenant le plan de sortie (4).
